# EUROPEAN PATENT APPLICATION

(11) **EP 4 656 845 A1**
(43) Date of publication of application: **03.12.2025**
(21) Application number: 25179732.0
(22) Date of filing: 29.05.2025
(51) Int. Cl.: F01D 25/16, F01D 25/20, F02C 7/26

(54) **PUMP AND SEPARATOR ASSEMBLY FOR GAS TURBINE ENGINES**

(30) Priority: 29.05.2024 US 202463652774 P; 24.07.2024 US 202418782271
(71) Applicant: RTX Corporation, Farmington, CT 06032 (US)
(72) Inventor: FINLEY, Austin, Farmington, 06032 (US); MITCHELL, Ryan A., Farmington, 06032 (US); STACHOWIAK, David Allen, Farmington, 06032 (US)
(74) Representative: Dehns

(57) **Abstract**

A pump assembly (20; 120) may include a drive mechanism (28; 128) and a rotatable shaft (26; 126) coupled to the drive mechanism (28; 128). A pump (22; 122) may be carried by the rotatable shaft (26; 126). The pump (22; 122) may include at least one pump stage (30; 130) for communication of a lubricant. A separator (24; 124) may be driven by the rotatable shaft (26; 126). The separator (24; 124) may be operable to separate oil from a mixture of air and oil. A method of assembly is also disclosed.

## Description

### TECHNICAL FIELD

This disclosure relates to gas turbine engines, and more particularly to lubricating various components of the engine.

### BACKGROUND

Gas turbine engines typically include a compressor section and a turbine section. The air is compressed in the compressor section. From the compressor section the air is introduced into a combustor section where it is mixed with fuel and ignited in a combustor. Products of this combustion pass downstream over a turbine section to extract energy for driving the compressor section.

Gas turbine engines can utilize auxiliary power units to provide motive power during engine start-up and to power various components of the engine and/or aircraft during operation.

### SUMMARY

According to an aspect of the present invention, a pump assembly may include a drive mechanism, a rotatable shaft coupled to the drive mechanism, a pump carried by the rotatable shaft, the pump including at least one pump stage for communication of a lubricant, and a separator driven by the rotatable shaft and operable to separate oil from a mixture of air and oil.

In an embodiment of the above, the at least one pump stage may include a first stage and a second stage. The first stage may include a plurality of vanes for directing supply oil from an oil supply to a bearing compartment. The second stage may include a plurality of vanes for directing scavenge oil from the bearing compartment to an oil reservoir.

In an embodiment according to any of the previous embodiments, the first stage and the second stage may be interlocked to the shaft to limit axial movement between the first stage and the second stage.

In an embodiment according to any of the previous embodiments, the separator may include a body and a plurality of paddles distributed about a periphery of the body.

In an embodiment according to any of the previous embodiments, the body may include an internal channel. The paddles may include respective fluid conduits that may interconnect the internal channel to the paddles. Each of the fluid conduits may be operable to separate air from the air and oil mixture and direct the air to the internal channel.

In an embodiment according to any of the previous embodiments, the body may extend along a longitudinal axis. Each of the fluid conduits may extend along the respective paddles at an angle transverse to the longitudinal axis.

In an embodiment according to any of the previous embodiments, the separator may be integrally formed on the shaft.

In an embodiment according to any of the previous embodiments, the shaft, the pump, and the separator may be axially aligned relative to a common axis.

In an embodiment according to any of the previous embodiments, a housing may include a first portion and a second portion that may enclose an internal cavity. The rotatable shaft may be positioned at least partially within the internal cavity.

In an embodiment according to any of the previous embodiments, the pump may be arranged in the first portion. The separator may be arranged in the second portion.

In an embodiment according to any of the previous embodiments, a gearbox may interconnect the shaft and the separator. The gearbox may define a gear ratio such that the separator may rotate at a different speed than the pump.

In an embodiment according to any of the previous embodiments, the drive mechanism may be an electric motor.

According to another aspect of the present invention, a gas turbine engine assembly may include a gas turbine engine including at least one bearing compartment and a pump assembly. The pump assembly may include a drive mechanism, a rotatable shaft coupled to the drive mechanism, a pump carried by the rotatable shaft, the pump including at least one pump stage for communication of a lubricant, and a separator driven by the rotatable shaft and operable to separate oil from a mixture of air and oil communicated by the at least one bearing compartment.

In an embodiment of the above, the gas turbine engine may be an auxiliary power unit.

In an embodiment according to any of the previous embodiments, the drive mechanism may be an electric motor.

In an embodiment according to any of the previous embodiments, a controller may be operable to modulate the drive mechanism in response to a speed of the pump and the separator.

According to another aspect of the present invention, a method of assembling a pump assembly may include positioning a pump on a rotatable shaft to form a sub-assembly, coupling a separator to the pump, positioning the sub-assembly in a housing, and coupling the sub-assembly to a drive mechanism.

In an embodiment of the above, the separator is integrally formed with the shaft.

In an embodiment according to any of the previous embodiments, the rotatable shaft and the separator are interconnected by a gearbox that defines a gear ratio such that the separator rotates at a different speed than the pump.

In an embodiment according to any of the previous embodiments, the drive mechanism may be an electric motor.

According to another aspect of the present invention, a method of assembling a pump assembly may include positioning a pump and a separator on a rotatable shaft to form a sub-assembly, positioning the sub-assembly in a housing, and coupling the rotatable shaft to a drive mechanism.

The present disclosure may include any one or more of the individual features disclosed above and/or below alone or in any combination thereof.

The various features and advantages of this disclosure will become apparent to those skilled in the art from the following detailed description. The drawings that accompany the detailed description can be briefly described as follows.

### BRIEF DESCRIPTION OF THE DRAWINGS

FIG. 1 discloses a pump assembly according to an implementation.
FIG. 2 is a cross-sectional view taken along line 2-2 of FIG. 1.
FIG. 3 is a cross-sectional view of a first pump stage taken along line 3-3 of FIG. 2.
FIG. 4 is a cross-sectional view of a second pump stage taken along line 4-4 of FIG. 4.
FIG. 5 is a side view of the pump assembly of FIG. 1 and a gas turbine engine.
FIG. 6 is an exploded view of the pump assembly of FIG. 1.
FIG. 7 discloses a housing and cover member for the pump assembly of FIG. 1.
FIG. 8 discloses a sub-assembly including a rotatable shaft carrying a pump and a separator.
FIG. 9 discloses a perspective view of the sub-assembly of FIG. 8 the pump assembly relative to the housing and cover member of FIG. 7.
FIG. 10 discloses a perspective view of the sub-assembly and housing of FIG. 8 secured to a drive mechanism.
FIG. 11 is a side view of a pump assembly including a gearbox arrangement according to another implementation.
FIG. 12 discloses a portion of a gearbox arrangement of the pump assembly of FIG. 11.
FIG. 13 discloses a method of assembly for a pump assembly according to an implementation.

Like reference numbers and designations in the various drawings indicate like elements.

### DETAILED DESCRIPTION

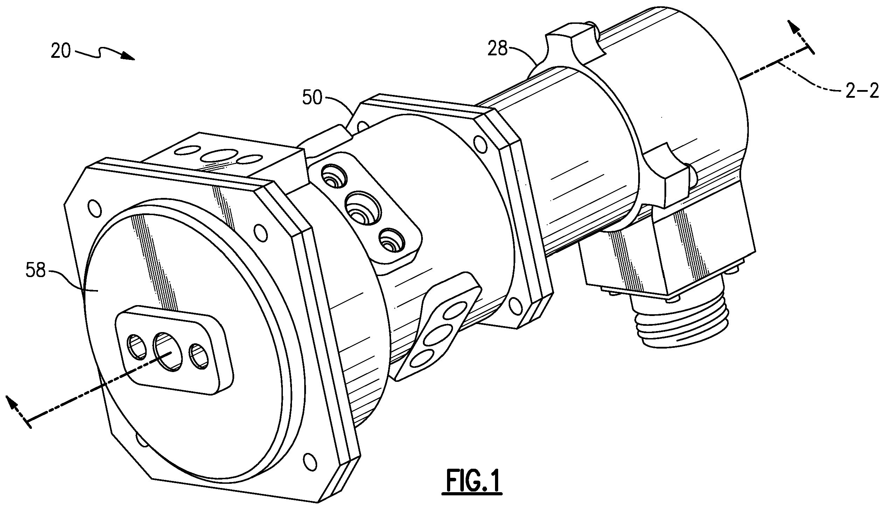

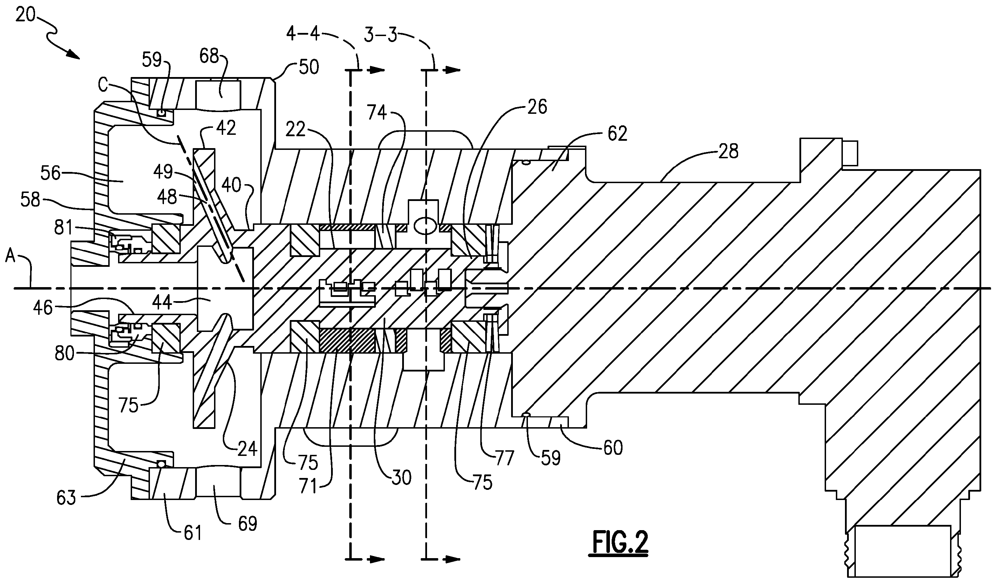

FIGS. 1-10 disclose a pump assembly 20 according to an implementation. The pump assembly 20 may include a pump 22, a separator (e.g., deoiler) 24, a rotatable shaft (e.g., rotor) 26, and a drive mechanism 28. Referring to FIG. 2, with continuing reference to FIG. 1, the pump 22 may be carried by or otherwise secured to the rotatable shaft 26. The pump 22 may include at least one pump stage 30 for communicating a lubricant such as oil to one or more components of a gas turbine engine and/or aircraft. In implementations, the pump stage 30 may include a first stage 32 and a second stage 34. The first and second stages 32, 34 may each include a plurality of respective vanes 36 for communicating lubricant. The vanes 36 may be positioned within the first and second stages 32, 34.

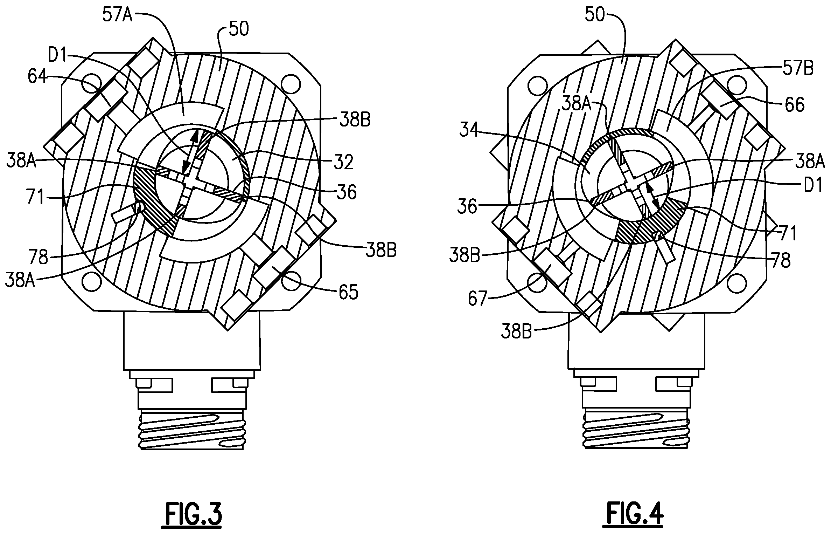

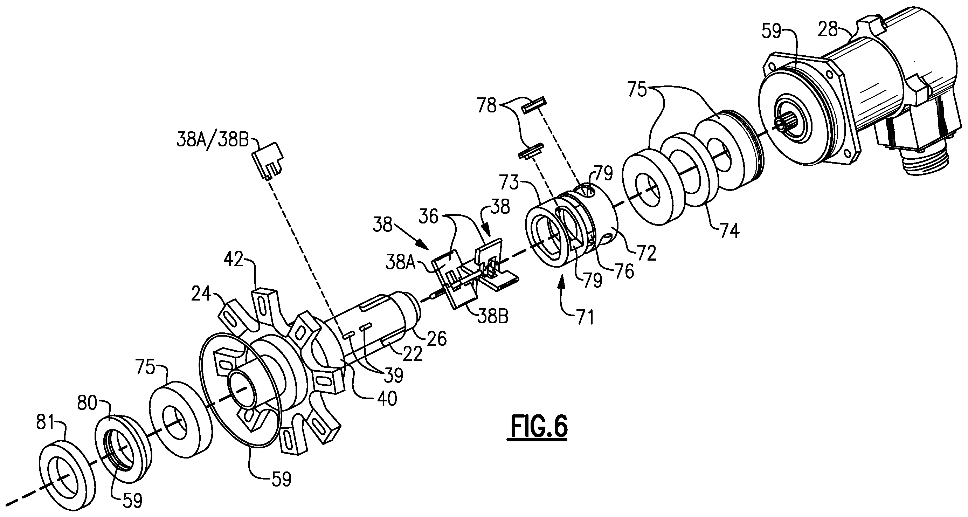

Referring to FIGS. 3, 4, and 6, with continuing reference to FIG. 2, the vanes 36 of the first and second stages 32, 34 may be interlocked or otherwise secured to the rotatable shaft 26 to limit axial movement between the vanes 36 of the first stage 32 and the second stage 34. Each vane 36 may be established by one or more components. The vanes 36 may include respective pairs of interlocking key members (e.g., vane segments) 38 (e.g., FIG. 6). In implementations, the key members 38 may include a first key member 38A and a second key member 38B that may be fixedly attached or otherwise secured to one another to form a respective vane 36. Each key member 38 may include a paddle. Pairs of the key members 38A, 38B may be releasably secured or otherwise attached to each other. The key members 38 may be interlocked to the rotatable shaft 26. The key members 38 may include one or more protrusions positionable in matching keyways 39 established in the rotatable shaft 26 (shown in dashed lines in FIG. 6). The protrusions of a set of the key members 38A, 38B may be fixedly attached to each other within an interior of the rotatable shaft 26. The key members 38 may interlock the vanes 36 of the first and second stages 32, 34 to the rotatable shaft 26 such that the vanes 36 may be rotatable in unison. Torque from the rotatable shaft 26 may be transmitted to the vanes 36 to pump lubricant.

The vanes 36 may be rotatable 360 degrees about the longitudinal axis A. In implementations, the vanes 36 may be adapted to slide or otherwise move radially inwardly and radially outwardly in a direction D1 within the respective stages 32, 34 to maintain contact with an inner periphery of a pump liner 71 during rotation of the vanes 36.

With reference to FIG. 2, the separator 24 may include a body 40 and one or more paddles 42 distributed about a periphery of the body 40. The body 40 may include an internal channel 44 that may be fluidly coupled to an outlet 46 of the rotatable shaft 26. The paddles 42 may include respective fluid conduits 48. Each fluid conduit 48 may include a respective inlet 49 along the paddle 42. The inlet 49 may be dimensioned to convey air from an internal cavity 56 into the respective fluid conduit 48. The internal channel 44 may interconnect the fluid conduits 48 and the outlet 46. The paddles 42 may extend generally perpendicularly or otherwise transversely from the body 40. The fluid conduits 48 may be operable to separate air from an air and oil mixture and direct the air to the internal channel 44. The body 40 may extend along a longitudinal axis A. Each of the fluid conduits 48 may extend along a respective conduit axis C at an angle transverse (e.g., oblique) to the longitudinal axis A.

The separator 24 may be carried by, or may otherwise be secured to, the rotatable shaft 26. The separator 24 may be integrally formed with the rotatable shaft 26. **In** other implementations, the separator 24 and the rotatable shaft 26 may be separate components, which may be fixedly attached or otherwise secured to each other. Torque from the rotatable shaft may be transmitted to the separator 24.

The pump 22, the separator 24, and the rotatable shaft 26 may be axially aligned relative to a common axis, such as longitudinal axis A.

The rotatable shaft 26 may be coupled to the drive mechanism 28. The drive mechanism 28 may be operable to apply a rotational force on the rotatable shaft 26 to drive (e.g., rotate) the pump 22 and/or the separator 24. Various drive mechanisms may be utilized. The drive mechanism 28 may be an electric motor or a hydraulic motor. Various techniques may be utilized to secure the rotatable shaft 26 and drive mechanism 28 to each other, such as a splined interface and/or one or more fasteners.

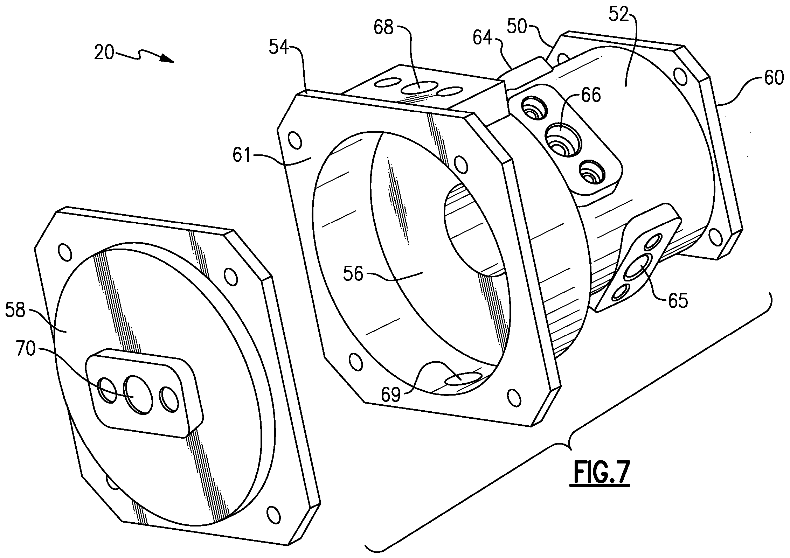

Referring to FIGS. 2 and 7, a housing 50 may at least partially enclose portions of the pump assembly 20. The housing 50 may include a first portion 52 and a second portion 54 that may enclose the internal cavity 56. The first portion 52 and second portion 54 may be integrally formed or may be separate components fixedly attached or otherwise secured to each other. The pump assembly 20 may be positioned at least partially within the internal cavity 56 between the drive mechanism 28 and a cover 58. The cover 58 may enclose the internal cavity 56. The rotatable shaft 26 may be at least partially positioned within the internal cavity 56 such that the pump 22 may be arranged in the first portion 52 and the separator 24 may be arranged in the second portion 54. The housing 50 may be cylindrical. The first portion 52 may have a different (e.g., smaller) diameter than the second portion 54.

The first portion 52 of the housing 50 may be secured to the drive mechanism 28. The second portion 54 of the housing 50 may be secured to the cover 58. The first portion 52 and second portion 54 may be secured utilizing various techniques, including one or more fasteners, welding, etc.

The pump assembly 20 may include one or more seals (e.g., seal rings) 59 for sealing the internal cavity 56 (e.g., FIGS. 2 and 6). The housing 50 may include a first flange 60 that may extend from the first portion 52. The housing 50 may include a second flange 61 that may extend from the second portion 54. The first flange 60 may partially cover or may otherwise receive the drive mechanism 28. The drive mechanism 28 may be at least partially received in the internal cavity 56. The first flange 60 may be secured to the drive mechanism 28. The seal 59 may be arranged at least partially about or otherwise along an end portion 62 of the drive mechanism 28 between the first flange 60 and the end portion 62 to provide sealing functionality therebetween. The second flange 61 may at least partially cover or may otherwise receive a flange of the cover 58. The second flange 61 may be secured to the cover 58. Another seal 59 may be arranged at least partially along an end portion 63 of the cover 58 between the second flange 61 and the end portion 63 to provide sealing functionality therebetween.

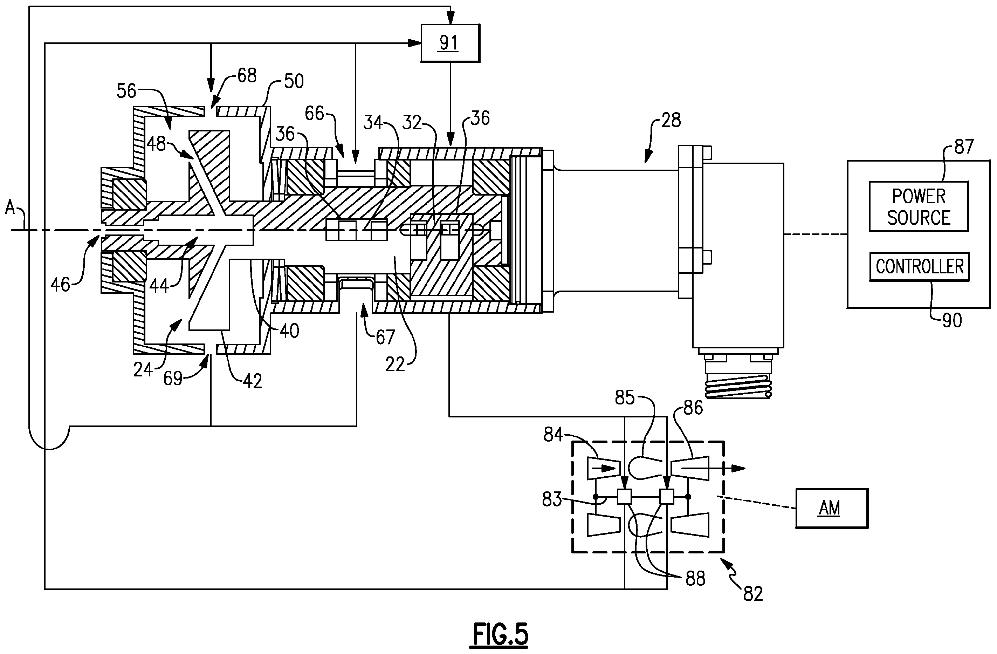

Referring to FIGS. 3-4, with continuing reference to FIG. 2, the housing 50 may include one or more inlets and/or outlets dimensioned to communicate lubricant to and/or from the pump stages 30. The housing 50 may include a first (e.g., supply) inlet 64, a first (e.g., supply) outlet 65, a second (e.g., scavenge) inlet 66, a second (e.g., scavenge) outlet 67, a third (e.g., drain) inlet 68 and/or a third (e.g., drain) outlet 69 for communication of a fluid such as air and/or lubricant. The supply inlet 64 and supply outlet 65 may be in fluid communication with the first stage 32 of the pump 22. The supply inlet 64 and the supply outlet 65 may be fluid connected by a first (e.g., supply) chamber 57A which may be formed in the housing 50 (FIG. 3). The scavenge inlet 66 and scavenge outlet 67 may be in fluid communication with the second stage 34 of the pump 22. The scavenge inlet 66 and the scavenge outlet 67 may be fluidly connected by a second (e.g., scavenge) chamber 57B which may be formed in the housing 50 (FIG. 4). In implementations, the vanes 36 may be positioned in the respective supply and scavenge chambers 57A, 57B. The drain inlet 68 and drain outlet 69 may be in fluid communication with the separator 24. The cover 58 may include an outlet 70 that may be in fluid communication with the internal channel 44 of the separator 24. In implementations, the supply inlet 64 may be coupled to a lubricant (e.g., oil) reservoir 91 (FIG. 5). The supply outlet 65 may be coupled to a bearing compartment 88 for conveying flow from the lubricant reservoir 91. The scavenge inlet 66 and/or drain inlet 68 may be coupled to the bearing compartment 88 for receiving lubricant circulated through the bearing compartment. The scavenge inlet 66 may be adapted to receive oil from the bearing compartment 88. The drain inlet 68 may be adapted to receive a mixture of air and oil from the bearing compartment 88. The scavenge outlet 67 and/or drain outlet 69 may be coupled to the lubricant reservoir 91 and may be adapted to return used lubricant to the lubricant reservoir 91.

Referring to FIGS. 6, 8, and 9, with continuing reference to FIG. 2, a pump liner 71 may establish one or more stages 30 of the pump 22. The pump liner 71 may include a first portion 72 and a second portion 73. The first portion 72 may establish the first stage 32 of the pump 22 between a spacer 74 and a bearing (e.g., journal bearing) 75. The second portion 73 may establish the second stage 34 between the spacer 74 and another bearing 75 that may interface with the separator 24. The spacer 74 may be positioned in an opening 76 established between the first portion 72 and the second portion 73. A washer (e.g., Belleville washer) 77 may be positioned between the bearing 75 and the drive mechanism 28.

Respective key members 78 may be secured to or otherwise arranged on the pump liner 71 to block or otherwise limit relative rotation between the pump liner 71 and the housing 50. The first portion 72 and the second portion 73 of the pump liner 71 may each include an opening (e.g., slot) 79 for receiving a respective key member 78. The key members 78 may extend generally perpendicularly or otherwise transversely from the pump liner 71 and may be received in respective openings (e.g., slots) in the housing 50 to limit relative rotation between the pump liner 71 and the housing 50 during rotation of the pump 22 with the rotatable shaft 26.

Another bearing 75 may be positioned between the separator 24 and a seal (e.g., carbon seal mating ring) 80, which may be positioned between the bearing 75 and another seal (e.g., carbon face seal) 81 that may interface with the cover 58. Additional seals 59 may be positioned to provide sealing functionality.

In the implementation of FIG. 5, the pump assembly 20 may communicate with a gas turbine engine such as an auxiliary power unit (APU) 82. The APU 82 may provide an on-board source of auxiliary electrical and/or electrical power to various aircraft modules AM. The aircraft modules AM may include avionics systems, cockpit, visualization and display systems, communications and navigation systems, input/output (I/O) modules to interconnect with other systems and modules of an aircraft, engine and fuel systems, electrical and auxiliary power systems, environment control systems (ECS), fire protection systems, galley control systems, lighting systems, water and waste systems, landing gear systems, diagnostics systems, and other known systems. The aircraft modules AM include one or more gas turbine engines to provide propulsion for an aircraft.

The APU 82 (FIG. 5) may include a gas turbine engine that may be operable to drive an electrical generator and/or (e.g., accessory) gearbox. Although the teachings herein primary refer to an aircraft, such as a fixed wing or rotary aircraft, other systems may benefit from the teachings herein, including other aerospace systems such as space vehicles and satellites, ground-based vehicles and power generation systems, and marine systems.

The APU 82 may be fluidly coupled to the pump assembly 20. The APU 82 may include at least one spool 83 defined by a compressor section 84 including at least one compressor and a turbine section 86 including at least one turbine. The APU 82 may include a combustor section 85 including at least one combustor. The combustor of the combustor section 85 may be in fluid communication with the compressor section 84 and the turbine section 86. In other implementations, the gas turbine engine may include a fan for providing propulsion. The spool 83 may be supported by one or more bearings in respective bearing compartments 88 of the APU 82.

The pump assembly 20 may be operable to supply lubricant to various portions of the APU 82, including the bearing compartment(s) 88. The drive mechanism 28 of the pump assembly 20 may be electrically coupled to a power source 87 and a controller 90. The power source 87 may be activated during engine startup and may provide power to the drive mechanism 28 and/or controller 90. The controller 90 may be operable to modulate or otherwise control the drive mechanism 28. The controller 90 may include one or more computer processors, memory, storage means, network devices, input and/or output devices, and/or interfaces. The controller 90 may be operable to execute one or more software programs. The memory may include UVPROM, EEPROM, FLASH, RAM, ROM, DVD, CD, a hard drive, or other computer readable medium which may store data and/or the functionality of this description. The controller 90 may be a desktop computer, laptop computer, smart phone, tablet, or any other computer device. Input devices may include a keyboard, mouse, touchscreen, etc. The output devices may include a monitor, speakers, printers, etc. In implementations, the controller 90 may be a full authority digital engine controller (FADEC).

The pump assembly 20 may be fluidly coupled to the bearing compartments 88. During operation, rotation of the pump 22 and associated vanes 36 in the first and second stages 32, 34 may rotate to communicate lubricant from a lubricant reservoir (e.g., oil supply) 91 which may be external to the housing 50. The vanes 36 in the first stage 32 may communicate lubricant through the supply inlet 64 and the supply outlet 65 of the housing 50 to the bearing compartments 88 to lubricate the respective bearings (FIG. 3). The lubricant may reduce friction, wear, and heat generation. The lubricant may carry away contaminants and particles from the bearings, which may reduce degradation and improve performance. The vanes 36 in the second stage 34 may scavenge lubricant from the bearing compartment 88 and communicate the scavenged lubricant through the scavenge inlet 66 and the scavenge outlet 67 of the housing 50 to the oil supply 91. The second stage 34 is operable to remove (e.g., scavenge) the used lubricant from the bearing compartments 88 and return the scavenged lubricant to the oil supply 91. The pump 22 may deliver lubricant from the oil supply 91 to the bearing compartments 88.

The controller 90 may be operable to modulate a speed of the rotatable shaft 26 to adjust (e.g., increase and/or decrease) a flow rate between the oil supply 91 and the bearing compartments 88.

The bearing compartments 88 may include a mixture of air and oil. The pump 22 may communicate lubricant to the bearing compartments 88 under pressure, which may introduce air into the bearing compartments 88. The scavenging process may remove oil and air from the bearing compartment 88.

The separator 24 may be operable to separate the oil from the mixture of air and oil from the bearing compartment 88. The mixture of air and oil may be directed through the third inlet 68 of the housing 50 to the internal cavity 56. The separator 24 may be rotatable with the rotatable shaft 26. The paddles 42 of the separator 24 may be rotatable with the body 40 of the separator 24 and thus also the rotatable shaft 26 which may create a centrifugal force within the internal cavity 56 sufficient to separate the heavier oil from the air. The heavier oil may be discharged through the third outlet 69 of the housing 50. The air may be directed through the fluid conduits 48 and the internal channel 44 of the separator 24 and may be discharged through the outlet 70 of the cover 58 into the atmosphere.

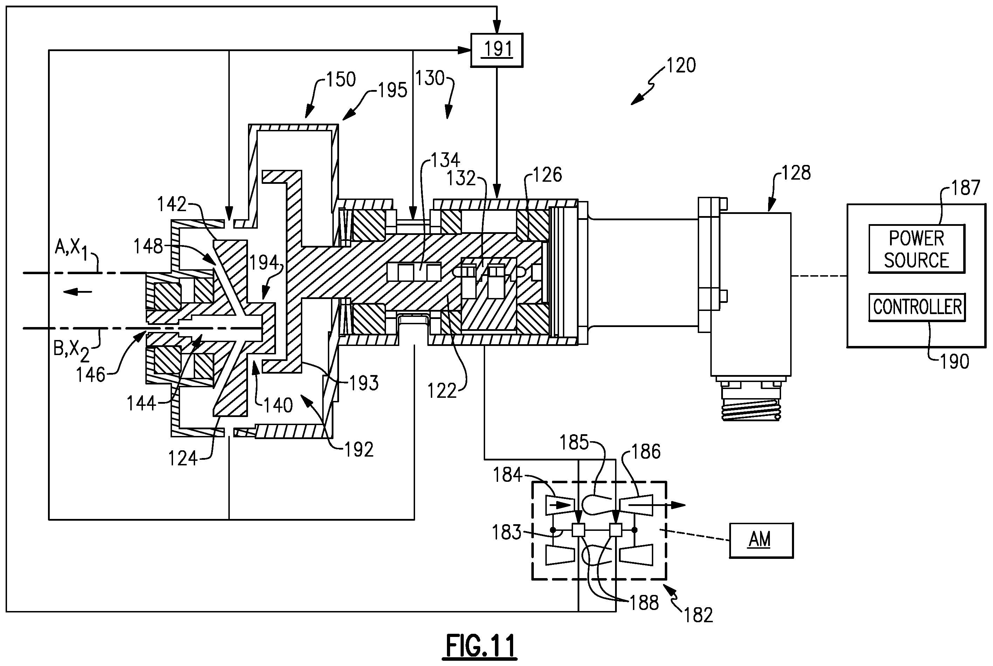

FIG. 11 discloses a pump assembly 120 according to another implementation. In this disclosure, like reference numerals designate like elements where appropriate and reference numerals with the addition of one-hundred or multiples thereof designate modified elements that are understood to incorporate the same features and benefits of the corresponding original elements. The pump assembly 120 may include a pump 122 and a separator 124 carried by a rotatable shaft 126. A drive mechanism 128 may be coupled to the rotatable shaft 126. The drive mechanism 128 may be operable to rotate or otherwise move the rotatable shaft 126. The pump 22 and the rotatable shaft 26 may be axially aligned relative to a common axis, such as longitudinal axis A. The separator 24 may extend along a longitudinal axis B. In implementations, the longitudinal axis A and the longitudinal axis B may be offset. In implementations, the longitudinal axis A and the longitudinal axis B may be substantially parallel to each other (e.g., FIG. 11). For the purposes of this disclosure, the term "substantially" means ±10 percent of the stated value or relationship unless otherwise indicated.

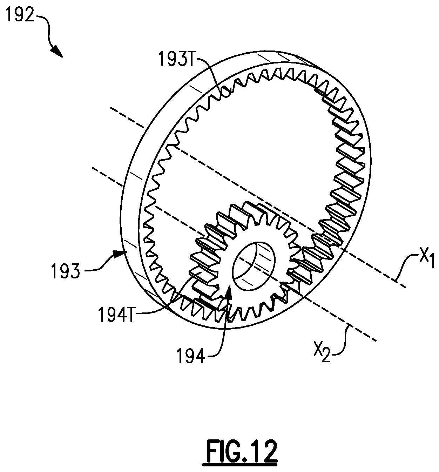

The pump assembly 120 may include a gearbox 192 (see also FIG. 12). The gearbox 192 may interconnect the separator 124 and the rotatable shaft 126. The gearbox 192 may be adapted to establish an offset between the longitudinal axis A and the longitudinal axis B. In the implementation of FIG. 12, the gearbox 192 may include a first gear 193 and a second gear 194. The first gear 193 may be integrally formed or otherwise secured to the rotatable shaft 126. The first gear 193 may be mechanically coupled to the pump 122 and may extend along a first axis X₁ that may be substantially aligned with the longitudinal axis A. The second gear 194 may be mechanically coupled to the separator 124 and may extend along a second axis X₂ that may be substantially aligned with the longitudinal axis B.

The first gear 193 may include a plurality of teeth 193T that may extend around an inner periphery of the first gear 193. The second gear 194 may include a plurality of teeth 194T that extend around an outer periphery of the second gear 194. The teeth 193T of the first gear 193 may mesh with the teeth 194T of the second gear 194. The drive mechanism 128 may be operable to rotate or otherwise move the rotatable shaft 126 which may cause the first gear 193 to rotate. Rotation of the first gear 193 may cause the second gear 194 to rotate to cause the separator 124 to rotate.

The gearbox 192 may define a gear ratio such that the pump 122 and the separator 124 may rotate at different speeds. The gear ratio may be greater than 1: 1, or more narrowly equal to or greater than 2:1 (e.g., approximately 3: 1) such that the separator 124 may rotate at a relatively faster speed than the stages 130 (e.g., the first and second stages 132, 134) of the pump 122. A controller 190 may be operable to modulate a drive mechanism 128 to rotate the pump 122 and the separator 124 at a selected speed. In implementations, the pump 122 may rotate at about 6,000 rpm and the separator 124 may rotate at about 18,000 rpm. For the purposes of this disclosure, the term "about" means ±10 percent of the stated value or relationship unless otherwise indicated.

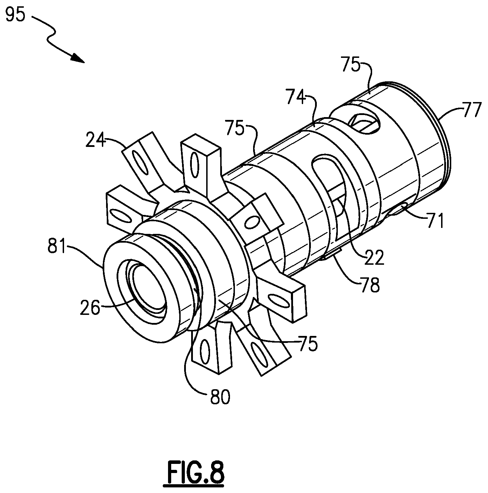

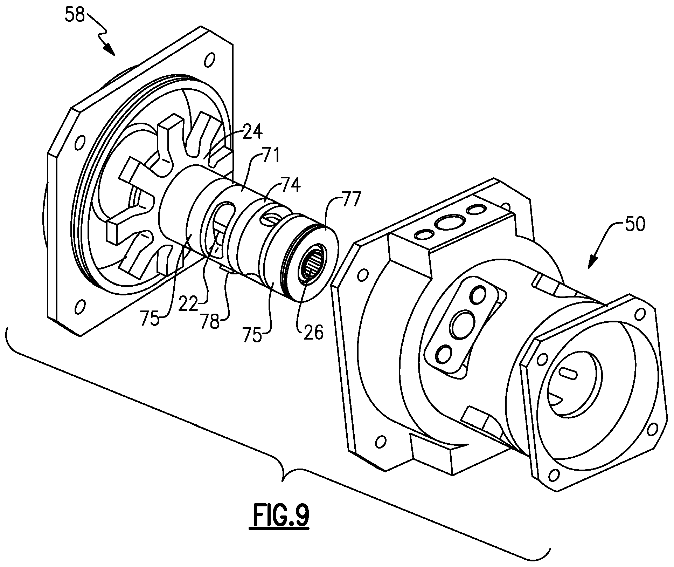

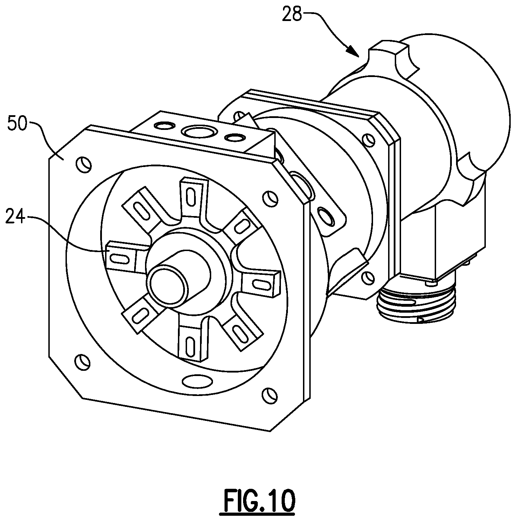

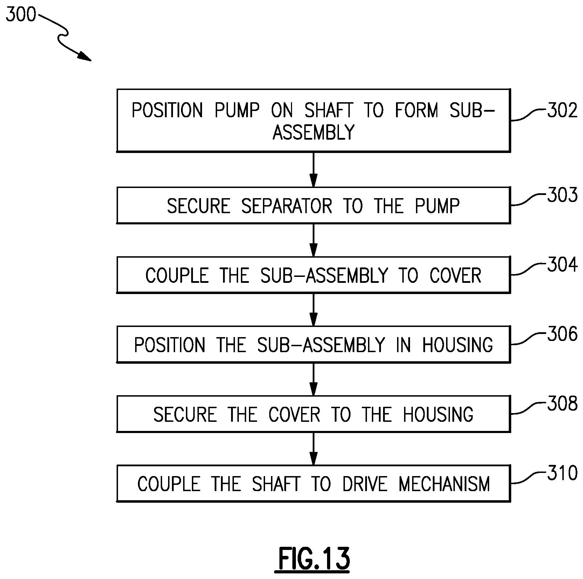

FIG. 13 discloses a method of assembly for a pump assembly in a flowchart 300 according to an implementation. The pump assembly may include the pump assemblies 20, 120. Reference is made to the pump assembly 20. At step 302, the pump 22 may be positioned on the rotatable shaft 26 to form a sub-assembly 95 (see FIG. 8). At step 303, the separator 24 may be secured to the rotatable shaft 26. In implementations, the separator 24 may be secured to the rotatable shaft 26 to form part of the sub-assembly 95. At step 304, the sub-assembly 95 may be coupled to the cover 58 (see FIG. 9). At step 306, the sub-assembly 95 may be positioned in the housing 50 (see FIG. 9). In implementations, the sub-assembly 95 may be positioned in the housing 50 prior to coupling the sub-assembly 95 to the cover 58. At step 308, the cover 58 and housing 50 may be secured together (see FIG. 10). At step 310, the rotatable shaft 26 may be coupled to the drive mechanism 28 (see FIG. 10). In the implementation of FIG. 11, the gearbox 192 may be arranged to interconnect the rotatable shaft 126 and the separator 124. The gearbox 192 may establish a portion of a sub-assembly 195.

Carrying the pump and the separator on the rotatable shaft may reduce system complexity and the total number of parts. The drive mechanism may be utilized to reduce the need for an accessory gearbox and may provide additional airframe integration flexibility by allowing the components to be installed remotely. The drive mechanism may reduce parasitic drag on an APU powerhead and may decouple lubrication system performance from powerhead speed, which may enable relatively faster start capabilities during operational and emergency scenarios.

Although the different examples have the specific components shown in the illustrations, embodiments of this disclosure are not limited to those particular combinations. It is possible to use some of the components or features from one of the examples in combination with features or components from another one of the examples.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the disclosure may be practiced other than as specifically described. For that reason the appended claims should be studied to determine true scope and content.

## Claims

1. A pump assembly (20; 120) comprising:
a drive mechanism (28; 128);
a rotatable shaft (26; 126) coupled to the drive mechanism (28; 128);
a pump (22; 122) carried by the rotatable shaft (26; 126), the pump (22; 122) including at least one pump stage (30; 130) for communication of a lubricant; and
a separator (24; 124) driven by the rotatable shaft (26; 126) and operable to separate oil from a mixture of air and oil.

2. The pump assembly (20; 120) as recited in claim 1, wherein the at least one pump stage (30; 130) includes a first stage (32; 132) and a second stage (34; 134), the first stage (32; 132) includes a plurality of vanes (36) for directing supply oil from an oil supply (91) to a bearing compartment (88), and the second stage (34; 134) includes a plurality of vanes (36) for directing scavenge oil from the bearing compartment (88) to an oil reservoir (91), optionally wherein the vanes (36) of the first stage (32; 132) and the second stage (34; 134) are interlocked to the shaft (26; 126) to limit axial movement between the vanes (36) of the first stage (32; 132) and the second stage (34; 134).

3. The pump assembly (20; 120) as recited in claim 1 or 2, wherein the separator (24; 124) includes a body (40), and a plurality of paddles (42) are distributed about a periphery of the body (40).

4. The pump assembly (20; 120) as recited in claim 3, wherein the body (40) includes an internal channel (44), the paddles (42) include respective fluid conduits (48) that interconnect the internal channel (44) to the paddles (42), each of the fluid conduits (48) operable to separate air from the air and oil mixture and direct the air to the internal channel (44), optionally wherein the body (40) extends along a longitudinal axis and each of the fluid conduits (48) extends along the respective paddles (42) at an angle transverse to the longitudinal axis (A).

5. The pump assembly (20; 120) as recited in any preceding claim, wherein the separator (24; 124) is integrally formed with the shaft (26; 126).

6. The pump assembly (20; 120) as recited in any preceding claim, wherein the shaft (26; 126), the pump (22; 122), and the separator (24; 124) are axially aligned relative to a common axis (A).

7. The pump assembly (20; 120) as recited in any preceding claim, further comprising a housing (50) including a first portion (52) and a second portion (54) that enclose an internal cavity (56), wherein the rotatable shaft (26; 126) is positioned at least partially within the internal cavity (56), optionally wherein:
the pump (22; 122) is arranged in the first portion (52); and
the separator (24; 124) is arranged in the second portion (54).

8. The pump assembly (120) as recited in any preceding claim, further comprising a gearbox (192) interconnecting the shaft (126) and the separator (124), the gearbox (192) defines a gear ratio such that the separator (124) rotates at a different speed than the pump (122).

9. The pump assembly (20; 120) as recited in any preceding claim, wherein the drive mechanism (28; 128) is an electric motor.

10. A gas turbine engine assembly comprising:
a gas turbine engine including at least one bearing compartment (88); and
the pump assembly (20; 120) of any preceding claim, wherein the at least one pump stage (30; 130) is for communicating lubricant to the at least one bearing compartment (88), and the mixture of air and oil is communicated by the at least one bearing compartment (88).

11. The assembly (95; 195) as recited in claim 10, wherein the gas turbine engine is an auxiliary power unit.

12. The assembly (95; 195) as recited in claim 10 or 11, further comprising a controller (90; 190) operable to modulate the drive mechanism (28; 128).

13. A method of assembling a pump assembly (20; 120), comprising:
positioning a pump (22; 122) on a rotatable shaft (26; 126) to form a sub-assembly (95; 195);
coupling a separator (24; 124) to the pump (22; 122);
positioning the sub-assembly (95; 195) in a housing (50); and
coupling the sub-assembly (95; 195) to a drive mechanism (28; 128).

14. The method as recited in claim 13, wherein:
the separator (24; 124) is integrally formed with the shaft (26; 126); and/or
the drive mechanism (28; 128) is an electric motor.

15. The method as recited in claim 13 or 14, wherein the rotatable shaft (126) and the separator (124) are interconnected by a gearbox (192) that defines a gear ratio such that the separator (124) rotates at a different speed than the pump (122).
